(19) Europäisches Patentamt
European Patent Office
Office européen des brevets

(11) EP 1 988 060 A1

(12) **EUROPEAN PATENT APPLICATION**
published in accordance with Art. 158(3) EPC

(43) Date of publication:
**05.11.2008 Bulletin 2008/45**

(21) Application number: **07714450.9**

(22) Date of filing: **19.02.2007**

(51) Int Cl.:
***C02F 3/12*** *(2006.01)* ***C02F 1/44*** *(2006.01)*

(86) International application number:
**PCT/JP2007/052924**

(87) International publication number:
**WO 2007/097269 (30.08.2007 Gazette 2007/35)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.02.2006 JP 2006047293**

(71) Applicant: **Asahi Kasei Chemicals Corporation**
**Tokyo 101-8101 (JP)**

(72) Inventors:
- **OKAMURA, Daisuke**
  **Tokyo 100-8440 (JP)**
- **HASHIMOTO, Tomotaka**
  **Tokyo 100-8440 (JP)**

(74) Representative: **Weber, Thomas**
**Deichmannhaus am Dom**
**Postfach 10 22 41**
**50462 Köln (DE)**

# (54) METHOD OF TREATING WASTEWATER

(57) Provided is a method of treating wastewater, containing: the flow-in step of flowing an organic wastewater into an activated sludge tank holding an activated sludge containing microorganisms therein; and the separation step of biologically treating the organic wastewater in the activated sludge tank and then subjecting thus treated liquor to solid-liquid separation with the use of a separation membrane device located in the activated sludge tank, wherein the sugar concentration in the aqueous phase of the activated sludge is maintained within a certain range in the separation step. The method of the present invention allows adequately evaluating the risk of decreasing the effective membrane area caused by the adhesion of biopolymers to the membrane surface, thus achieving efficient wastewater treatment while preventing the increase in the membrane filtration resistance.

*Fig.7*

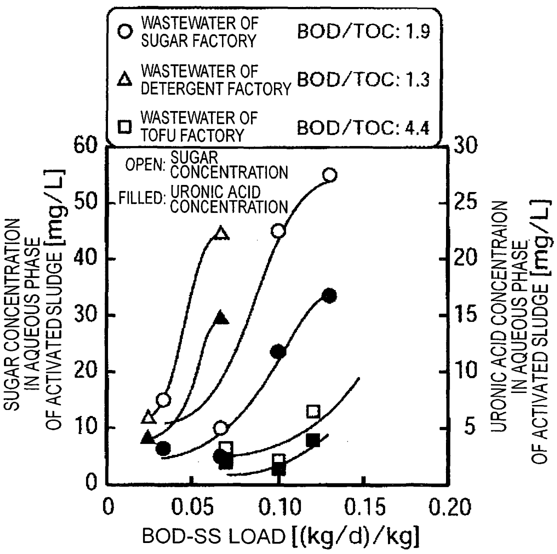


EP 1 988 060 A1

## Description

### Technical Field

The present invention relates to a method of treating organic wastewater by the membrane separation activated sludge process.

### Background Art

The membrane separation activated sludge process is a method of treating wastewater, which process is conducted by immersing a membrane cartridge in an activated sludge tank, thus performing filtration to execute solid-liquid separation to obtain the activated sludge and the treated liquor. The process can conduct solid-liquid separation after increasing the activated sludge concentration (mixed liquor suspended solid, hereinafter referred to as MLSS) to an extremely high level of 5000 to 20000 mg/l. With that high MLSS level, the process has an advantage of decreasing the capacity of the activated sludge tank or of shortening the reaction time in the activated sludge tank. Furthermore, since the filtration is conducted by membrane, no suspended solid (hereinafter also referred to as SS) enters the treated liquor. Being free from SS eliminates the final sedimentation tank and can decrease the installation area of the treatment facilities. In addition, since the filtration can be performed independent of the easiness/difficulty of sedimentation of the activated sludge, the control work of the activated sludge can be also decreased. Owing to these advantages, the membrane separation activated sludge process has shown rapid propagations in recent years.

The membrane cartridge adopts flat membrane or hollow fiber membrane. In particular, since the hollow fiber membrane has high strength of the membrane itself, the membrane surface suffers small damages caused by the contact with foreign substances entering from the organic wastewater, and endures long period of use. Furthermore, the hollow fiber membrane has also an advantage of allowing backwashing by ejecting a medium such as filtrate to inverse direction to the filtration direction, thus removing the substances adhered to the membrane surface. However, the activated sludge or the biopolymers formed by the metabolism of microorganisms in the activated sludge adhere to the membrane surface to decrease the effective membrane surface area, thus decreasing the filtration efficiency. As a result, the hollow fiber membrane is required to receive frequent backwashing, which raises a problem of failing to attain stable filtration over a long period.

To those problems, for example Japanese Patent Laid-Open No. 2000-157846 (Patent Document 1) discloses a method of aeration using air and the like from beneath the hollow fiber membrane cartridge. According to the method, the membrane vibration effect and the agitation effect of ascending bubbles separate the coagulated activated sludge adhered to surface of and gap between the membranes and separate the foreign substances carried by the raw water, and prevent the accumulation of them. Specifically, for example, a lower ring is located beneath the hollow fiber membrane cartridge, and a plurality of throughholes is provided at the attached fixed layer on the lower ring side, thus creating an air pocket within the lower ring utilizing the aeration from below the cartridge, thereby generating bubbles uniformly from the plurality of throughholes.

However, if the variations of concentration of organic substances in the organic wastewater are significant, or if an oxidant, an acidic liquor, a basic liquor and the like enter the activated sludge tank, microorganisms discharge abnormally large quantities of metabolic products (referred to as the biopolymers) therefrom, in some cases. When the state of abnormally high concentration of the biopolymers is sustained, the aeration fails to fully separate the biopolymers adhered to the outer surface of membrane, resulting in the increased membrane filtration resistance.

Japanese Patent Laid-Open No. 2005-40747 (Patent Document 2) discloses a method of preventing the adhesion of excess quantity of polymers to the membrane surface by measuring the quantity of biopolymers in the biological treatment tank (aeration tank), and by decreasing the quantity of biopolymers in the biological treatment tank at an adequate timing. According to the method, the chemical oxygen demand (COD) value is determined as the substitution of the quantity of biopolymers. The COD value, however, includes the quantity of organic substances which can pass through the micropores of the membrane. Therefore, there is a possibility that the risk of decreasing the membrane area caused by adhesion of the biopolymers to the membrane is evaluated excessively higher than as is, which adds the work of unnecessarily decreasing the quantity of biopolymers to deteriorate the work efficiency of wastewater treatment.

Japanese Patent Laid-Open No. 2002-1333 (Patent Document 3) discloses a method to decrease the quantity of filtration-inhibiting components composed of polymer organic compounds existing in the biological treatment tank. According to the method, the filtration-inhibition components are separated by a filter medium after adding a coagulant, or they are centrifugally separated after adding a coagulant, thus discarding them. The method is therefore a highly troublesome one.

Patent Document 1: Japanese Patent Laid-Open No. 2000-157846
Patent Document 2: Japanese Patent Laid-Open No. 2005-40747

Patent Document 3: Japanese Patent Laid-Open No. 2002-1333

## Disclosure of the Invention

Problems to be Solved by the Invention

An object of the present invention is to provide a method of efficiently treating wastewater, which method adequately evaluates the risk of decreasing the membrane area caused by the adhesion of biopolymers to the membrane, thus preventing the increase in the membrane filtration resistance.

## Means to Solve the Problems

The inventors of the present invention conducted detail studies, and found that the substances which adhere to the outer surface of membrane to inhibit the filtration are sugar, specifically biopolymers composed mainly of uronic acid, having several hundreds of thousands to several millions of molecular weight, and further found that the increase/decrease in the quantity of the organic substances to the quantity of the activated sludge allows controlling also the biopolymers in the aqueous phase of the activated sludge. That is, the method of treating wastewater according to the present invention is the following.

<1> A method of treating wastewater contains: the flow-in step of flowing an organic wastewater into an activated sludge tank holding an activated sludge containing microorganisms therein; and the separation step of biologically treating the organic wastewater in the activated sludge tank and then subjecting thus treated liquor to solid-liquid separation with the use of a separation membrane device located in the activated sludge tank, wherein the sugar concentration in the aqueous phase of the activated sludge is maintained within a specified range in the separation step.
<2> The method of treating wastewater according to <1>, wherein the sugar concentration is the concentration of uronic acid.
<3> The method of treating wastewater according to <1> or <2>, wherein the separation step conducts increase/decrease of the quantity of the organic substances to the quantity of the activated sludge in the activated sludge tank so as the sugar concentration to be maintained within the specified range.
<4> The method of treating wastewater according to <3>, wherein the increase/decrease of the quantity of organic substances to the quantity of the activated sludge is conducted by increasing/decreasing the quantity of the organic wastewater entering the activated sludge tank or by increasing/decreasing the quantity of the organic wastewater entering the activated sludge tank and the quantity of filtrate, separated by solid-liquid separation in the separation membrane device, being discharged from the sludge tank.
<5> The method of treating wastewater according to <3>, wherein the increase/decrease of the quantity of the organic substances to the quantity of the activated sludge is conducted by increasing/decreasing the activated sludge concentration and/or the volume of the activated sludge.
<6> The method of treating wastewater according to <1> or <2>, wherein the specified value of the sugar concentration is determined depending on the filtration flux value of the separation membrane device.
<7> The method of treating wastewater according to any of <1>, <2>, <3>, and <6>, wherein the sugar concentration in the aqueous phase of the activated sludge is determined by filtering the activated sludge through a filter medium which has larger pore size than that of the separation membrane of the separation membrane device, and then by measuring the sugar concentration of thus obtained filtrate.

## Effect of the Invention

According to the method of treating wastewater of the present invention, monitoring the sugar concentration and/or the uronic acid concentration in the activated sludge tank allows grasping the quantity of biopolymers causing the clogging of membrane, and, when the sugar concentration and/or the uronic acid concentration increase, decreasing the BOD-SS load allows preventing the clogging of separation membrane and allows conducting stable solid-liquid separation for a long period. On the other hand, when the sugar concentration and/or the uronic acid concentration are excessively lower than those of the respectively specified values, the BOD-SS load can be increased until the sugar concentration and/or the uronic acid concentration increase to near the respectively specified values. As a result, the work efficiency of wastewater treatment can be increased.

## Brief Description of the Drawings

Fig. 1 is a block diagram illustrating an example of a system conducting a wastewater treatment according to the present invention.
Fig. 2 shows the relation between the sugar concentration in the filtrate passed through a filter paper and the membrane filtration resistance of activated sludge.
Fig. 3 shows the relation between a COD difference value in activated sludge and the membrane filtration resistance.
Fig. 4 shows the relation between an uronic acid concentration and the sugar concentration in the filtrate passed through a filter paper in activated sludge.
Fig. 5 is a GPC chart of the filtrate passed through a filter paper in activated sludge.
Fig. 6 is a GPC chart of the permeate of the membrane filtration of the filtrate passed through a filter paper of activated sludge.
Fig. 7 shows the relation between a BOD-SS load and the sugar concentration in the aqueous phase of activated sludge.
Fig. 8 is a graph showing the pressure difference across membrane, the sugar concentration, and the inflow rate of wastewater in Example 1.
Fig. 9 is a graph showing the pressure difference across membranes, the sugar concentration, and the inflow rate of wastewater in Example 2.

## Description of the Reference Symbols

| | |
|---|---|
| 1 | Organic wastewater |
| 2 | Preliminary treatment device |
| 3 | Flow equalization tank |
| 4 | Activated sludge tank (Aeration tank) |
| 5 | Hollow fiber membrane type separation membrane device |
| 6 | Skirt |
| 7 | Blower |
| 8 | Suction pump |
| 9 | Filtrate |
| 10 | Sterilization tank |
| 11 | Treated liquor |
| 12 | Sludge withdrawal pump |

## Best Modes for Carrying Out the Invention

The method of treating wastewater according to the present invention is composed of: the flow-in step of flowing an organic wastewater into an activated sludge tank holding an activated sludge containing microorganisms therein; and the separation step of biologically treating the organic wastewater in the activated sludge tank and then subjecting thus treated liquor to solid-liquid separation with the use of a separation membrane device located in the activated sludge tank.

The flow-in step has a preliminary treatment device which removes foreign substances from the organic wastewater entering the activated sludge tank, a flow equalization tank which adjusts the flow rate of organic wastewater entering the activated sludge tank, and the like. The separation step has the activated sludge tank which treats the wastewater biologically, a membrane separation device which conducts solid-liquid separation of the treated liquor, a suction pump which withdraws the filtrate, and the like.

The flow-in step supplies the organic wastewater which roughly removed coarse solid matter and the like to the activated sludge tank while equalizing the flow rate thereof to a constant level. In the activated sludge tank, organic substances (BOD components) in the organic wastewater are decomposed by the microorganisms in the activated sludge. The size of the activated sludge tank and the retention time of the organic wastewater in the activated sludge tank are determined by the discharge rate of the organic wastewater and the concentration of organic substances in the organic wastewater. The concentration of activated sludge in the activated sludge tank can be set to about 5 to about 15 g/L. In the separation step, the separation membrane device conducts the solid-liquid separation, separating into the activated sludge and the organic wastewater in the activated sludge tank. The immersion type separation membrane device positioned in the activated sludge tank is composed of a separation membrane and a water-collecting section, and further has a skirt. A blower supplies a gas to the skirt, thus oscillating the membrane, and further the membrane surface is hit by a water stream to receive shearing force, thus preventing clogging of the membrane. The water-collecting section in the separation membrane device is connected to the suction pump by a pipe, and the suction pump generates a pressure gradient between the inner face and the outer face of the membrane, thus achieving the solid-liquid separation.

The membrane cartridge used for the separation membrane may use a known separation membrane such as flat membrane and hollow fiber membrane. Among them, the hollow fiber membrane is preferred owing to the high strength of the membrane itself, to the generation of less damages on the surface of membrane caused by the contact with foreign substances in the organic wastewater, and to the endurance to long period of use. In addition, the filter membrane can be backwashed by ejecting filtrate and the like to inverse direction to the filtration direction, thus removing the substances adhered to the membrane surface. The separation membrane device may not only be positioned by immersing thereof in the activated sludge tank but also be positioned by connecting with the activated sludge tank. The method of the present invention therefore is applicable not only to the immersion type membrane separation activated sludge process but also to the case of mounting the separation membrane device in a tank different from the activated sludge tank, and further to the case of pressure-type separation membrane device. For these cases, the activated sludge is recycled between the activated sludge tank and the separation membrane device, and the concentrate is returned to the activated sludge tank. The separation membrane may be prepared in a plurality of rows, as needed. Since the plurality of rows allows conducting separation operation in each row, or allow stopping the separation operation in each row, the wastewater treatment speed can be adjusted.

The device which is applied to the above wastewater treatment process includes, for example, the one shown in Fig. 1.

An organic wastewater 1 entering the activated sludge tank is treated by a preliminary treatment device 2 to remove the foreign substances, and then is temporarily stored in a flow equalization tank 3. After that, the organic wastewater is supplied to an activated sludge tank (aeration tank) 4 from the flow equalization tank 3 at a constant flow rate.

In the activated sludge tank 4, the microorganisms in the activated sludge held in the tank decompose to remove the organic substances (BOD components) in the organic wastewater 1. The solid-liquid separation of the activated sludge mixed liquor in the activated sludge tank 4 is conducted in the separation membrane device 5 immersed in the tank. A skirt 6 and a blower 7 are positioned beneath the separation membrane device 5, and the blower feeds a gas to the skirt. A filtrate 9 separated in the separation membrane device 5 is sucked by a suction pump 8, and is discharged as a treated liquor 11, after, as needed, sterilized in a sterilization tank 10. In the activated sludge tank 4, the microorganisms decompose the BOD components and discharge the metabolic products therefrom. Regarding the biopolymers composed mainly of sugar and proteins, as the metabolic products of the microorganisms, specifically for the case that organic substances excessively enter the activated sludge tank, and for the case that the variations of concentration of organic substances in the inflow water are significant, if an oxidant, an acidic liquor, a basic liquor, or the like enters the activated sludge tank, excess quantity of biopolymers is discharged from the microorganisms to enhance the clogging of the separation membrane. According to the present invention, however, the measurement of sugar concentration, preferably the uronic acid concentration, in the aqueous phase of the activated sludge held in the activated sludge tank 4 allows adequately evaluating the risk of clogging the separation membrane caused by the biopolymers.

The wastewater which can receive the effect of the treatment of the method according to the present invention includes food factory wastewater, sugar factory wastewater, detergent factory wastewater, starch factory wastewater, and tofu factory wastewater, and higher effect is expected for wastewater having BOD of 100 mg/L or more.

According to the present invention, the sugar concentration in the aqueous phase of the activated sludge is required to be maintained at or below a specified value. The upper limit of the specified values of the sugar concentration is required to be 100 mg/L or less. If the value exceeds the upper limit, the clogging of separation membrane caused by the biopolymers and the activated sludge becomes significant, and the filtration pressure increases. Preferred sugar concentration is 80 mg/L or less, more preferably 50 mg/L or less, and most preferably about 30 mg/L.

Lower sugar concentration is more preferable because the clogging of the membrane becomes less. However, lower sugar concentration decreases the capacity of wastewater treatment, accordingly. Considering the balance between the capacity of wastewater treatment and the clogging, the lower limit of the sugar concentration has to be specified to 5 mg/L, preferably to 10 mg/L, and more preferably to about 20 mg/L.

It is more preferable that the uronic acid concentration, instead of the sugar concentration, is maintained within the above specified values, which allows further accurately grasping the risk of clogging of the membrane. Particularly when the organic wastewater entering the activated sludge tank contains a large quantity of sugar, use of the sugar concentration as the index of clogging substances gives the measurement of sugar originated from the organic wastewater, adding to the measurement of the target sugar as the biopolymers, which may lead to the evaluation of excessively large quantity of clogging substances. In that case, measurement of uronic acid concentration provides more accurate evaluation of the clogging. More preferable upper limit of the uronic acid concentration is 50 mg/L or less, further preferably 30 mg/L or less, still further preferably 20 mg/L or less, and most preferably 10 mg/L. Preferred lower limit of the uronic acid concentration is 3 mg/L or more, and more preferably 5 mg/L or more.

Furthermore, each concentration is preferably determined depending on the filtration flux. According to the present invention, the filtration flux is normally in a range from 0.1 to 1.0 m/D, and 0.4 to 0.8 m/D is preferred in view of allowing efficient wastewater treatment. As a target level of sugar concentration in that case, the following ranges are the most preferable:

80 mg/L or less for 0.2 m/D of filtration flux in the separation membrane device;
50 mg/L or less for 0.4 m/D of filtration flux in the separation membrane device;
30 mg/L or less for 0.6 m/D of filtration flux in the separation membrane device; and
10 mg/L or less for 0.8 m/D of filtration flux in the separation membrane device.

The filtration flux of 0.6 m/D signifies the operation allowing the filtrate of 0.6 $m^3$ to pass 1 $m^2$ of filtration area in 24 hours.

Although the method for measuring the sugar concentration is not specifically limited, there is a method, for example, in which the phenol-sulfuric acid method is applied for the measurement, and the working curve prepared by glucose is used to determine the sugar concentration.

For measuring the sugar concentration and/or the uronic acid concentration, it is preferable that the activated sludge is filtered by a filter medium such as filter paper which has larger pore size than that of the separation membrane of the separation membrane device to obtain the sludge filtrate, and then by measuring the sugar concentration and/or the uronic acid concentration of thus obtained filtrate. By the operation, the filter medium captures only the suspended solids in the activated sludge, while allowing the sugar components to pass through the filter paper. Consequently, by measuring the sugar concentration and/or the uronic acid concentration in the filtrate, the concentration of biopolymers which become the clogging substance to the membrane can be more accurately determined.

The pore size of the filter medium is preferably 5 times the pore size of separation membrane mounted on the separation membrane device, and more preferably 10 times or more. It is preferable that the pore size of the filter medium has the upper limit of about 100 times or less the pore size of the separation membrane mounted on the separation membrane device, and that the upper limit of the pore size of the filter medium is 10 μm. Furthermore, a hydrophilic material is preferable owing to the less adsorption of the sugar components. That type of filter medium includes a filter paper made from cellulose, for example.

The concentration of uronic acid can be determined on a working curve prepared using polygalacturonic acid which is a polyuronic acid, in accordance with the method described in "New Method for Quantitative Determination of Uronic Acid", Nelly Blumenkrantz and Gustav Asboe-Hansen, ANALYTICAL BIOCHEMISTRY, vol. 54, pp. 484-489, (1973). The method follows the steps of:

(1) putting 0.5 mL of sludge filtrate and an aqueous solution of polygalacturonic acid at a known concentration in separate test tubes, respectively, and adding 3.0 mL of 0.0125M $Na_2B_4O_7$ conc.sulfuric acid solution to each test tube;
(2) fully shaking each liquid in each test tube, and warming the liquid in a boiling bath for 5 minutes, and then cooling the liquid in ice water for 20 minutes;
(3) adding 50 μL of 0.5% NaOH solution of 0.15% m-hydroxydiphenyl to each liquid; and
(4) after fully agitating the liquid, allowing the liquid to stand for 5 minutes, and determining the 520 nm absorbance of the liquid, and then comparing the determined absorbance between that of the aqueous solution of polygalacturonic acid of the known concentration and that of the sludge filtrate to derive the concentration of polygalacturonic acid.

The changes in the sugar concentration and/or the uronic acid concentration with time can be determined by measuring regularly the sugar concentration and/or the uronic acid concentration once every several hours or several days, for example.

Regular measurement of the sugar concentration and/or the uronic acid concentration gives indication of increase in the sugar concentration and/or the uronic acid concentration, or of increase in the concentration of biopolymers, which allows applying preventive measures before clogging the membrane. It is most preferable that the sugar concentration and/or the uronic acid concentration are monitored always to adjust their concentration level within a specified range.

To cause the sugar concentration and/or the uronic acid concentration in the aqueous phase of the activated sludge to be within the specified range, there is applied, for example, a method to increase/decrease the quantity of organic substances [kg] to the quantity of activated sludge in the activated sludge tank. The quantity of organic substances to the quantity of activated sludge is called the "BOD-SS load". As an index of the quantity of organic substances, there is applied BOD [kg/day] entering the activated sludge tank per day.

The inventors of the present invention found that the BOD-SS load has a close relation to the sugar concentration and/or the uronic acid concentration in the aqueous phase of the activated sludge. High BOD-SS load indicates the state in which larger quantities of organic substances as the feed to microorganisms exist compared with the quantity of microorganisms. Once that state is established, the microorganisms actively perform metabolic activity, thus discharging excess quantity of biopolymers, or sugar, acting as the clogging substances. Inversely, if the microorganisms are brought into a starvation state, the metabolic activity decreases to stop discharging the biopolymers, and furthermore, the sugar concentration becomes further low because the microorganisms presumably consume sugar.

Consequently, if the sugar concentration and/or the uronic acid concentration increase, the BOD-SS load is decreased, and if the sugar concentration and/or the uronic acid concentration decrease, the BOD-SS load is increased as the respective counter actions. These actions prevent the adhesion of biopolymers to the membrane, and allow stable continuation of solid-liquid separation without clogging the membrane.

A method to increase/decrease the BOD-SS load is the increase/decrease of the quantity of organic substances in the activated sludge tank. Specific methods thereof include: (1) a method to increase/decrease the quantity of organic wastewater entering the activated sludge tank; (2) a method to increase/decrease the quantity of organic wastewater entering the activated sludge tank and increase/decrease the quantity of filtrate discharged from the activated sludge tank, which filtrate is prepared by solid-liquid separation in the separation membrane device; and (3) a method to increase/decrease the filtration flux.

The methods to increase/decrease the quantity of organic substances are not limited to the ones given above, and other methods can be applied. For example, there are: a method to remove the organic substances from the organic wastewater by separating the solid organic substances using a filter medium; a method to increase the concentration of activated sludge by decreasing the quantity of withdrawing excess sludge, or a method to increase/decrease the concentration of activated sludge by controlling the quantity of withdrawing excess sludge; a method to decrease the quantity of activated sludge in the activated sludge tank by lowering the liquid level in the activated sludge tank, or a method to increase/decrease the quantity of activated sludge by controlling the volume of activated sludge through the control of liquid level in the activated sludge tank; and a method to add water to the activated sludge tank.

Among these methods, the method to increase/decrease the quantity of organic wastewater entering the activated sludge tank is the simplest one, and is preferred. Specifically, decrease in the quantity of organic wastewater entering the activated sludge tank can decrease the sugar concentration and/or the uronic acid concentration. On the other hand, if the sugar concentration and/or the uronic acid concentration are lower than the respectively specified values, increase in the quantity of organic wastewater entering the activated sludge tank can increase the sugar concentration and/or the uronic acid concentration. By this operation, the efficiency of wastewater treatment can be increased while preventing clogging of separation membrane.

The quantity of increase/decrease of the organic wastewater entering the activated sludge tank and the quantity of increase/decrease of the BOD-SS load are required to be determined for each organic wastewater to be treated. For example, if the quantity of organic wastewater entering the activated sludge tank is decreased by half, or the BOD-SS load is decreased by half, the trend of magnitude of variations of increase/decrease in the sugar concentration and/or the uronic acid concentration is grasped. Then, based on thus grasped trend, the degree of increase/decrease of the quantity of organic wastewater is decided.

Although the detail quantity of increase/decrease in the organic wastewater depends on the size of the activated sludge tank, the kind of the activated sludge, and the like, when, for instance, the sugar concentration and/or the uronic acid concentration increased, the decrease in the BOD-SS load to an approximate level of 0.02 kg-BOD/(kg·day) allows the sugar concentration and/or the uronic acid concentration to decrease to about half the original concentration in about one week.

As described above, among the biopolymers such as sugar, proteins, and nucleic acids, the biopolymers adhered to the surface of separation membrane to induce clogging are mainly polymers having sugar, specifically uronic acid, as the major component. Therefore, as described in the present invention, maintaining the sugar concentration and/or the uronic acid concentration within the respectively specified ranges can prevent the biopolymers from adhering to the membrane surface and increasing the membrane filtration resistance. The separation membrane comes to clog after a certain period of use, and needs to undergo cleaning. According to the method of the present invention, however, the frequency of cleaning can be minimized. In addition, since the method of the present invention evaluates the risk of decreasing the membrane area using the sugar concentration and/or the uronic acid concentrations, there can be avoided the overevaluation of the risk to detect also the biopolymers which can pass through the separation membrane. As a result, the prevention of adhesion of the biopolymers to the separation membrane is conducted at a necessary and sufficient level, and the decrease in the work efficiency of wastewater treatment can be also prevented.

## Examples

The examples of the present invention are described below. The present invention, however, is not limited to these examples.

(Specifying biopolymers adhering to the separation membrane)

For the case that an organic wastewater discharged from a sugar factory and a detergent factory, respectively, is treated by the membrane separation activated sludge process, the substances that clog the separation membrane were specified by the following method.

First, an activated sludge containing organic wastewater was filtered using a filter paper (5C (trade name), made of cellulose, manufactured by Advantech Co., Ltd.) having 1 μm of pore size. The obtained filtrate (hereinafter referred to as the "sludge filtrate") was filtered using a hollow fiber membrane (made of PVDF, 0.02 $m^2$ of membrane area, 15 cm of effective membrane length, 0.6/1.2 mm of inner diameter/outer diameter, manufactured by Asahi Chemicals Corporation) having 0.1 μm of pore size, for total 7 cycles, each cycle being composed of 9 minutes of filtration and 1 minute of backwashing.

The filtration resistance Rc has a relation given by the formula (I). By plotting the values (pressure difference across the membrane, viscosity, and flux) obtained by the above membrane filtration experiment, an approximation line of the relation between Pn/(μJ) and n was drawn. From the inclination of the line, Rc was determined.

$$Pn/(\mu J) = n \times Rc \qquad (I)$$

where, n is the number of filtration cycles; Pn is the average value of the pressure difference across the membrane at n-th cycle, [Pa]; μ is the viscosity of water [Pa·s]; and J is the flux [m/D].

The sugar concentration in the filtrate was determined by the phenol-sulfuric acid method. On drawing the working curve, the concentration was determined using glucose. As a result, as shown in Fig. 2, there was confirmed the existence of a proportional relation between the calculated filtration resistance and the sugar concentration in the filtrate.

As for the concentration of uronic acid, the concentration of polygalacturonic acid was determined in accordance with the method described in the above-given "New Method for Quantitative Determination of Uronic Acid", ANALYTICAL BIOCHEMISTRY, vol. 54, pp. 484-489, (1973). The method follows the steps of:

(1) putting 0.5 mL of sludge filtrate and an aqueous solution of polygalacturonic acid at a known concentration in separate test tubes, respectively, and adding 3.0 mL of 0.0125M $Na_2B_4O_7$ conc.sulfuric acid solution to each test tube;
(2) fully shaking each liquid in each test tube, and warming the liquid in a boiling bath for 5 minutes, and then cooling the liquid in ice water for 20 minutes;
(3) adding 50 μL of 0.5% NaOH solution of 0.15% m-hydroxydiphenyl to each liquid; and
(4) after fully agitating the liquid, allowing the liquid to stand for 5 minutes, and determining the 520 nm absorbance of the liquid, and then comparing the determined absorbance between that of the aqueous solution of polygalacturonic acid of the known concentration and that of the sludge filtrate to derive the concentration of polygalacturonic acid.

The result showed, as given in Fig. 4, that the sugar concentration in the above sludge filtrate has nearly proportional relation to the concentration of uronic acid which is a sugar.

Furthermore, the molecular weight distribution of the liquor before membrane filtration and of the permeate after membrane filtration, respectively, was determined by high-performance liquid chromatography, which result is given in Fig. 5 and Fig. 6, respectively. Varieties of PVAs, each of which molecular weight was known, were analyzed by the high-performance liquid chromatography to determine the relation between the generated holding time and the molecular weight, and the relation was applied to convert the holding time into the molecular weight, which derived molecular weight was adopted as the horizontal axis of Fig. 5 and Fig. 6. As seen in these figures, the peak height appeared in a range from several hundreds of thousands to several millions of molecular weight, in Fig. 5, became small in Fig. 6, which showed the decrease in the quantity of substances having that molecular weight caused by the membrane filtration.

The above result suggests that the substances clogging the membrane in the membrane separation activated sludge process are the uronic acid-containing polymers composed mainly of sugar and having molecular weights ranging from several hundreds of thousands to several millions.

Separately, a liquor prepared by dissolving polygalacturonic acid in the sludge filtrate, at four respective concentrations of 40 mg/L, 60 mg/L, 80 mg/L, and 100 mg/L, was used to determine the filtration resistance. The result is, as shown in Fig. 2, that the liquor dissolving polygalacturonic acid showed larger inclination of the resistance curve than that of the filtrate of activated sludge passed through a filter paper. That is, among sugars, the liquor containing larger quantity of uronic acid gave larger filtration resistance.

Separately, conforming to the method of Japanese Patent Laid-Open No. 2005-40747, (Patent Document 2), an activated sludge was filtered by the filter paper same to that of above case. The difference between the COD of thus obtained filtrate and the COD of permeate obtained by further filtering the above filtrate using the above hollow fiber membrane was determined to adopt as the COD difference value, which COD difference values were plotted on Fig. 3. Since the COD difference values include the values based on the components capable of passing through the membrane, the comparison with the sugar concentration in terms of the filtration resistance showed that the adoption of COD difference value gave larger error.

Therefore, the measurement of sugar concentration in the aqueous phase of the activated sludge, preferably the measurement of uronic acid concentration showed to give more accurate evaluation on the quantity of substances adhering to the surface of the separation membrane among the biopolymers.

(Confirming capability of controlling the sugar concentration)

Conforming to the following method, it was confirmed that the increase/decrease in the BOD-SS load can control the sugar concentration in the aqueous phase of the activated sludge.

First, three respective kinds of organic wastewater, namely the wastewater of sugar factory, the wastewater of detergent factory, and the wastewater of tofu factory, were subjected to membrane separation activated sludge treatment in continuous operating mode in accordance with the process shown in Fig. 1. Each wastewater was diluted by water to vary the BOD-SS value, and the sugar concentration and the uronic acid concentration in the aqueous phase of the activated sludge under various BOD-SS loads were determined. As for the sugar concentration, the filtrate obtained by filtering the activated sludge using a filter paper (5C (trade name), made of cellulose, manufactured by Advantech Co., Ltd.) was analyzed by the phenol-sulfuric acid method, and the working curve prepared by glucose was used to determine the sugar concentration. The uronic acid concentration was derived using a working curve of polygalacturonic acid using the procedure similar to that given above. The membrane separation treatment was conducted using the hollow fiber membrane same to that of above case as the separation membrane.

The result is given in Fig. 7. When the BOD-SS load in the activated sludge tank was high, the sugar concentration and the uronic acid concentration increased. Conversely, when the BOD-SS load therein was set to a low level, the sugar concentration and the uronic acid concentration became low.

As a result, it was confirmed that an extremely simple process of controlling the BOD-SS load achieves the control to keep the sugar concentration and the uronic acid concentration within the respectively specified ranges.

(Example 1 and Comparative Example 1)

In the process shown in Fig. 1, the wastewater of sugar factory, having 750 mg/L of BOD, was treated by the membrane separation activated sludge process in continuous operating mode. The concentration of sugar and uronic acid in the wastewater was 60 mg/L and 0 mg/L, respectively.

As the separation membrane device 5, a separation membrane device (made of PVDF, 0.015 $m^2$ of membrane area, 15 cm of effective membrane length, 0.6/1.2 mm of inner diameter/outer diameter, manufactured by Asahi Chemicals Corporation) composed of a module of precision filtration hollow fiber membrane having 0.1 μm of pore size was prepared, which device 5 was then immersed in the activated sludge tank 4 having 10 L of effective capacity. The MLSS concentration in the activated sludge tank was kept constant to 10 g/L, and the retention time of wastewater in the activated sludge tank 4 was regulated to 18 hours. The filtration pressure at the beginning of the treatment was 4 kPa. The liquid quantity of the activated sludge was kept constant. The separation membrane device 5 was divided into two lines having the same membrane area with each other, the filtration flux was set to 0.6 m/D for each line, and the entire filtrate was discharged outside the activated sludge tank 4. The sugar concentration in the aqueous phase in the activated sludge tank 4 was regulated to 50 mg/L of upper limit and 20 mg/L of lower limit. The uronic acid concentration was regulated to 18 mg/L of upper limit and 5 mg/L of lower limit. The aeration to the membrane was executed by supplying air from beneath the membrane module at a flow rate of 200 L/hr.

As for the sugar concentration, the filtrate obtained by filtering the activated sludge using a filter paper (5C, made of cellulose, 1 μm of pore size, manufactured by Advantech Co., Ltd.) was analyzed by the phenol-sulfuric acid method, and the working curve prepared by glucose was used to determine the sugar concentration. The uronic acid concentration was derived using a working curve of polygalacturonic acid using the procedure same to that given above.

The sugar concentration and the uronic acid concentration in the aqueous phase of the activated sludge were determined once every day. The result is given in Fig. 8. After about one week had passed since the beginning of operation, the sugar concentration and the uronic acid concentration in the aqueous phase of the activated sludge abruptly increased, and on 11th day, the concentration of sugar and uronic acid became 50 mg/L and 20 mg/L, respectively. By stopping one line of the separation membrane device 5, both the quantity of discharging the filtrate outside the activated sludge tank and the quantity of wastewater entering the activated sludge tank decreased by half, respectively, thus decreased the concentration of sugar and uronic acid to 20 mg/L and 5 mg/L, respectively. After that, the one line operation was continued, and the operation was stable without giving abrupt increase in the pressure difference across the membrane, as shown in Fig. 8.

The wastewater same to that in Example 1 was treated using the same system to that of Example 1. After 20 days had passed since the beginning of the treatment, the sugar concentration became 80 mg/L, and the uronic acid concentration became 35 mg/L. The operation was continued in that state. Then, the filtration pressure exceeded 25 kPa, and cleaning of separation membrane was required.

(Example 2)

With the process shown in Fig. 1, the wastewater of sugar factory, having 250 mg/L of BOD, was treated by the membrane separation activated sludge process in continuous operating mode. The concentration of sugar and uronic acid in the wastewater was 30 mg/L and 0 mg/L, respectively. As the separation membrane device 5, a separation membrane device (made of PVDF, 0.015 $m^2$ of membrane area, 15 cm of effective membrane length, 0.6/1.2 mm of inner diameter/outer diameter, manufactured by Asahi Chemicals Corporation) composed of a module of precision filtration hollow fiber membrane having 0.1 μm of pore size was prepared, which device 5 was then immersed in the activated sludge tank 4 having 10 L of effective capacity. The MLSS concentration was kept constant to 10 g/L, and the retention time of wastewater in the activated sludge tank 4 was regulated to 18 hours. The filtration pressure at the beginning of the treatment was 4 kPa. The liquid quantity of the activated sludge was kept constant. A separation membrane device of a single line was installed. The filtration flux was set to 0.6 m/D, and the entire filtrate was discharged outside the activated sludge tank 4. The sugar concentration in the aqueous phase in the activated sludge tank 4 was regulated to 70 mg/L of upper limit and 10 mg/L of lower limit. The uronic acid concentration was regulated to 20 mg/L of upper limit and 5 mg/L of lower limit. The aeration to the membrane was executed by supplying air from beneath the membrane module at a flow rate of 200 L/hr.

As for the sugar concentration, the filtrate obtained by filtering the activated sludge using a filter paper (5C, made of cellulose, 1 μm of pore size, manufactured by Advantech Co., Ltd.) was analyzed by the phenol-sulfuric acid method, similar to that described above, and the working curve prepared by glucose was used to determine the sugar concentration. The uronic acid concentration was derived using a working curve of polygalacturonic acid using the procedure similar to that given above.

The sugar concentration and the uronic acid concentration in the aqueous phase of the activated sludge were determined once every day. The result is given in Fig. 9. Even after about one week had passed since the beginning of operation, the sugar concentration and the uronic acid concentration in the aqueous phase of the activated sludge stayed at about 5 mg/L and about 2 mg/L, respectively, giving the values far below the specified values. Then, on 8th day after beginning the operation, the membrane area of the separation membrane device was increased by double, and the inflow rate of wastewater to the activated sludge tank was increased by double. After that, although the concentration of sugar and uronic acid increased to 20 mg/L and 7 mg/L, respectively, no further increase occurred. That is, even by doubling the inflow rate of wastewater, the pressure difference across the membrane did not show the rapid increase, and stable operation was attained.

(Example 3)

With the process shown in Fig. 1, the wastewater of starch factory, having 750 mg/L of BOD, was treated by the membrane separation activated sludge process in continuous operating mode. The concentration of sugar and uronic acid in the wastewater was 800 mg/L and 0 mg/L, respectively. The sugar concentration in the wastewater was about 800 mg/L. As the separation membrane, the separation membrane device same to that in Example 2 was immersed. The MLSS concentration was kept constant to 10 g/L, and the retention time of the wastewater of sugar factory in the activated sludge tank was regulated to 18 hours. The quantity of the activated sludge was kept constant. A separation membrane device of a single line was installed. The filtration flux was set to 0.6 m/D, and the entire filtrate was discharged outside the activated sludge tank 4. The aeration to the membrane was executed by supplying air from beneath the membrane module at a flow rate of 200 L/hr.

As for the sugar concentration, the filtrate obtained by filtering the activated sludge using a filter paper (5C, 1 μm of pore size, manufactured by Advantech Co., Ltd.) was analyzed by the phenol-sulfuric acid method, and the working curve prepared by glucose was used to determine the sugar concentration. The uronic acid concentration was derived using a working curve of polygalacturonic acid using the procedure same to that given above.

The initial filtration pressure was 5 kPa. On 25th day since the beginning of the operation, the sugar concentration was 80 mg/L as glucose. When, however, the uronic acid concentration was determined on that day, it was 17 mg/L as polygalacturonic acid. The pressure difference across the membrane did not increase, and the value was 13 kPa on 25th day compared with 10 kPa at the beginning. That is, the determination of uronic acid concentration more accurately predicts the clogging.

(Example 4)

The same wastewater to that treated in Example 1 was treated by similar method to that of Example 1. As the separation membrane device 5, a separation membrane device (made of PVDF, 0.022 $m^2$ of membrane area, 15 cm of effective membrane length, 0.6/1.2 mm of inner diameter/outer diameter, manufactured by Asahi Chemicals Corporation) composed of a module of precision filtration hollow fiber membrane having 0.1 μm of pore size was used.

For each example, the uronic acid concentration and the sugar concentration in the aqueous phase of the activated sludge were determined once every day. At each uronic acid concentration, there was determined the filtration flux at which the membrane filtration pressure stayed within 10 kPa of increase from the initial pressure even after 20 days had passed since the beginning of the operation. Table 1 shows the result.

[Table 1]

| | Uronic acid cone. [mg/L] | Sugar conc. [mg/L] | Filtration flux [m/D] | Filtration pressure [kPa] | |
|---|---|---|---|---|---|
| | | | | Initial | After 20 days |
| Example 4-1 | 7 | 9 | 0.8 | 4 | 11 |
| Example 4-2 | 12 | 15 | 0.8 | 4 | 25 |
| Example 4-3 | 18 | 28 | 0.6 | 4 | 9 |
| Example 4-4 | 22 | 35 | 0.6 | 5 | 30 |
| Example 4-5 | 28 | 47 | 0.4 | 5 | 10 |
| Example 4-6 | 33 | 53 | 0.4 | 5 | 33 |

The experimental result showed that the best conditions for the uronic acid concentration and the flux value are the following:

10 mg/L or less for 0.8 m/D of filtration flux in the separation membrane device;
20 mg/L or less for 0.6 m/D of filtration flux in the separation membrane device; and
30 mg/L or less for 0.4 m/D of filtration flux in the separation membrane device.

## Industrial Applicability

The present invention provides a method of treating wastewater efficiently while preventing increase in the membrane filtration resistance by adequately evaluating the risk of decreasing effective membrane area caused by the adhesion of biopolymers to the membrane surface. As a result, the method of the present invention can be effectively applied to reclamation treatment of wastewater of varieties of factories.

## Claims

**1.** A method of treating wastewater comprising:

a flow-in step of flowing an organic wastewater into an activated sludge tank holding an activated sludge containing microorganisms therein; and
a separation step of biologically treating the organic wastewater in the activated sludge tank and then subjecting thus treated liquor to solid-liquid separation with the use of a separation membrane device located in the activated sludge tank,

wherein the sugar concentration in the aqueous phase of the activated sludge is maintained within a specified range in the separation step.

**2.** The method of treating wastewater according to claim 1, wherein the sugar concentration is the concentration of uronic acid.

**3.** The method of treating wastewater according to claim 1 or claim 2, wherein the separation step conducts increase/decrease of the quantity of organic substances to the quantity of the activated sludge in the activated sludge tank so as the sugar concentration to be maintained within the specified range.

**4.** The method of treating wastewater according to claim 3, wherein the increase/decrease of the quantity of the organic substances to the quantity of the activated sludge is conducted by increasing/decreasing the quantity of the organic wastewater entering the activated sludge tank or by increasing/decreasing the quantity of the organic wastewater entering the activated sludge tank and the quantity of filtrate, separated by solid-liquid separation in the separation membrane device, being discharged from the sludge tank.

**5.** The method of treating wastewater according to claim 3, wherein the increase/decrease of the quantity of the organic substances to the quantity of the activated sludge is conducted by increasing/decreasing the activated sludge concentration and/or the volume of the activated sludge.

**6.** The method of treating wastewater according to claim 1 or claim 2, wherein the specified value of the sugar concentration is determined depending on the filtration flux value of the separation membrane device.

**7.** The method of treating wastewater according to any of claims 1, 2, 3, and 6, wherein the sugar concentration in the aqueous phase of the activated sludge is determined by filtering the activated sludge through a filter medium which has larger pore size than that of the separation membrane of the separation membrane device, and then by measuring the sugar concentration of thus obtained filtrate.

*Fig.1*

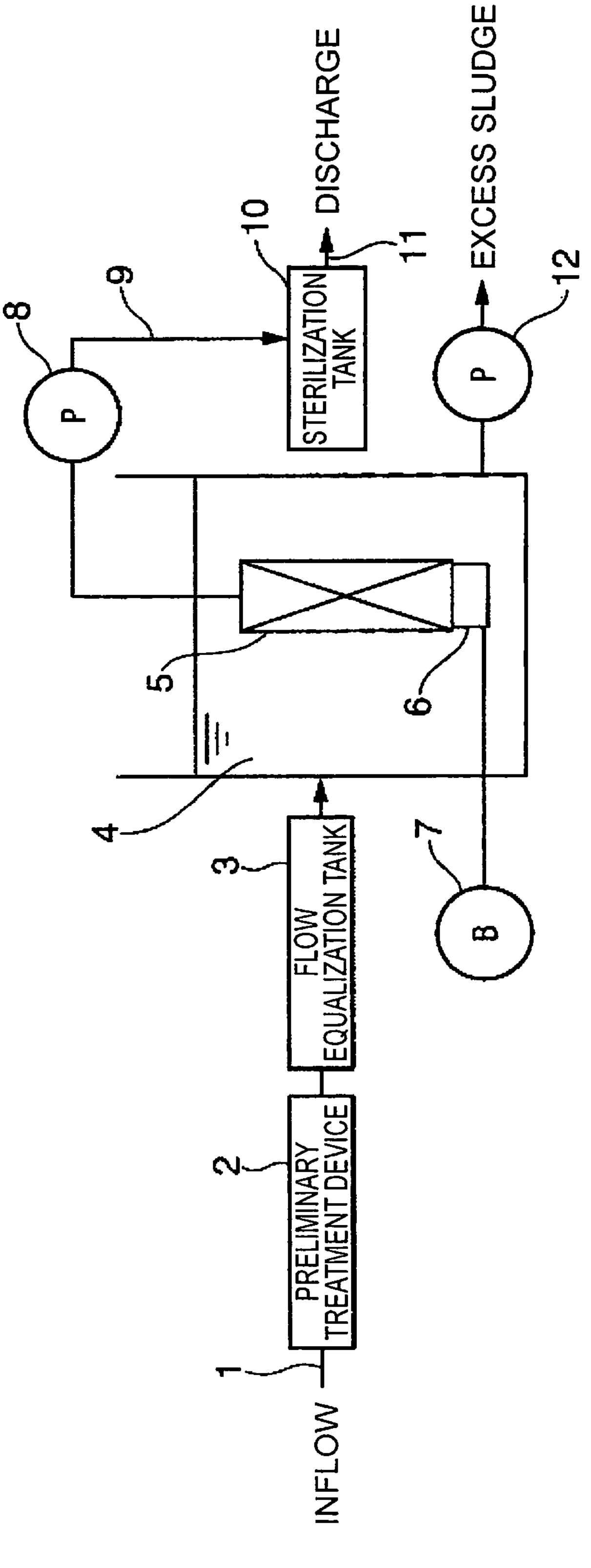
INFLOW
1
PRELIMINARY TREATMENT DEVICE
2
FLOW EQUALIZATION TANK
3
4
5
6
B
7
P
8
9
STERILIZATION TANK
10
DISCHARGE
11
P
12
EXCESS SLUDGE

*Fig.2*

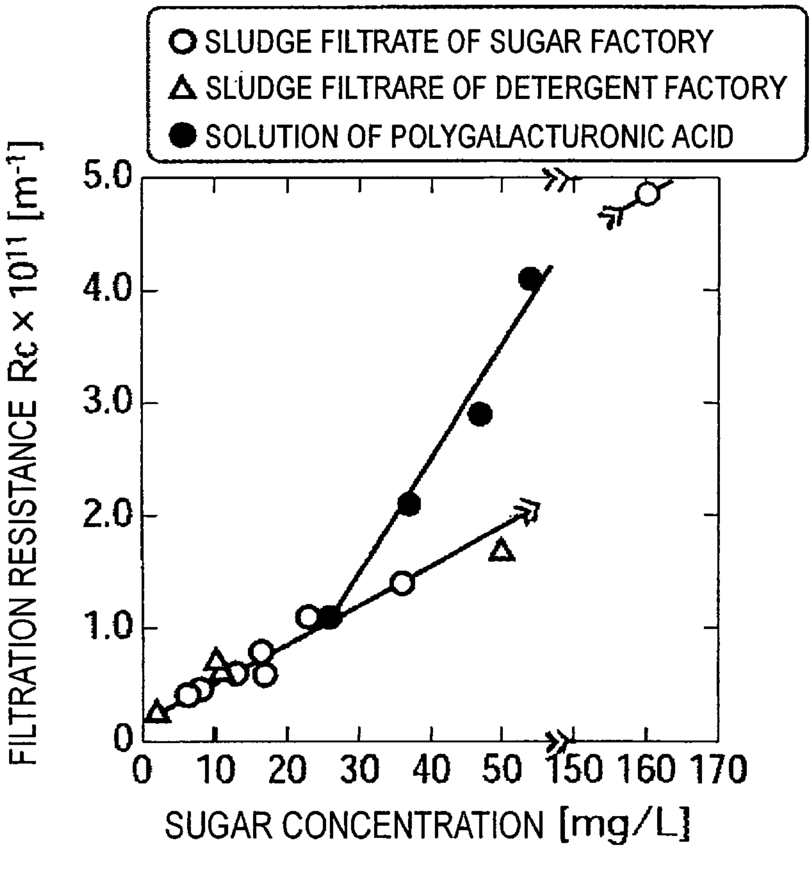

SLUDGE FILTRATE OF SUGAR FACTORY
SLUDGE FILTRARE OF DETERGENT FACTORY
SOLUTION OF POLYGALACTURONIC ACID
FILTRATION RESISTANCE Rc × 10^11 [m^-1]
5.0
4.0
3.0
2.0
1.0
0
0 10 20 30 40 50 150 160 170
SUGAR CONCENTRATION [mg/L]

*Fig.3*

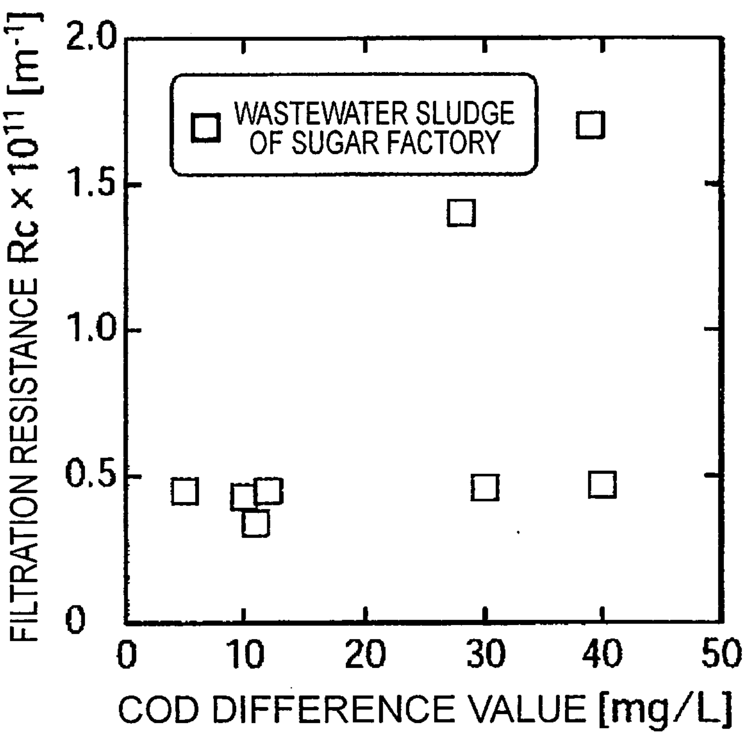
FILTRATION RESISTANCE Rc × 10^11 [m^-1]
2.0
1.5
1.0
0.5
0
WASTEWATER SLUDGE
OF SUGAR FACTORY
0
10
20
30
40
50
COD DIFFERENCE VALUE [mg/L]

*Fig.4*

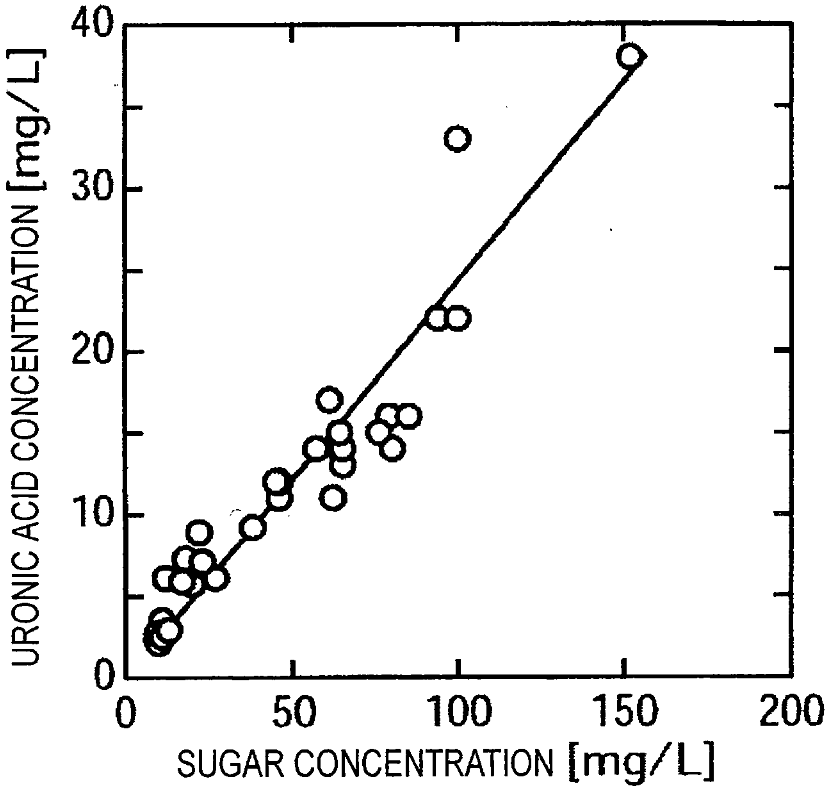
URONIC ACID CONCENTRATION [mg/L]
40
30
20
10
0
0
50
100
150
200
SUGAR CONCENTRATION [mg/L]

Fig.5

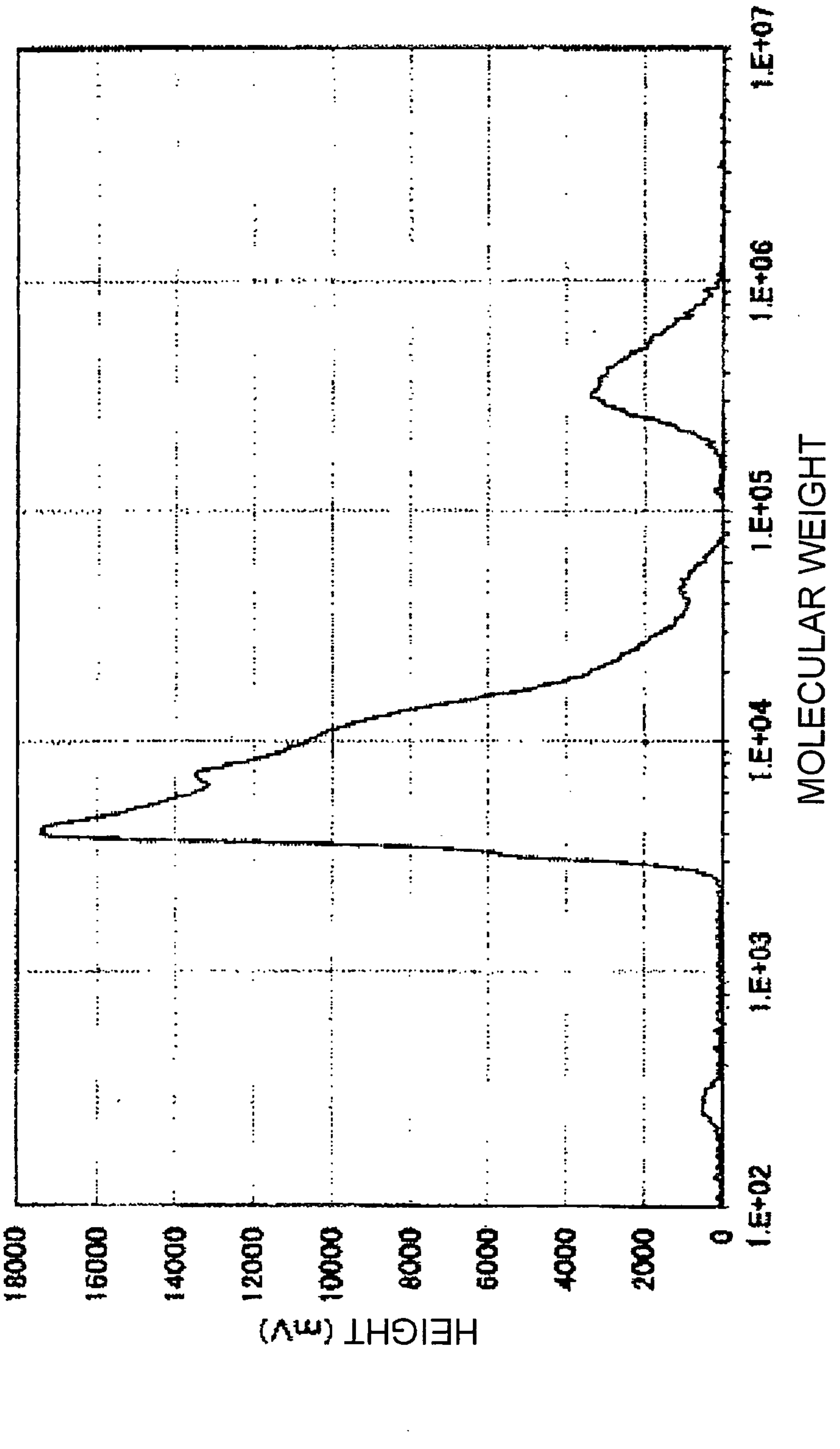
HEIGHT (mV)
18000
16000
14000
12000
10000
8000
6000
4000
2000
0
1.E+02
1.E+03
1.E+04
1.E+05
1.E+06
1.E+07
MOLECULAR WEIGHT

*Fig.6*

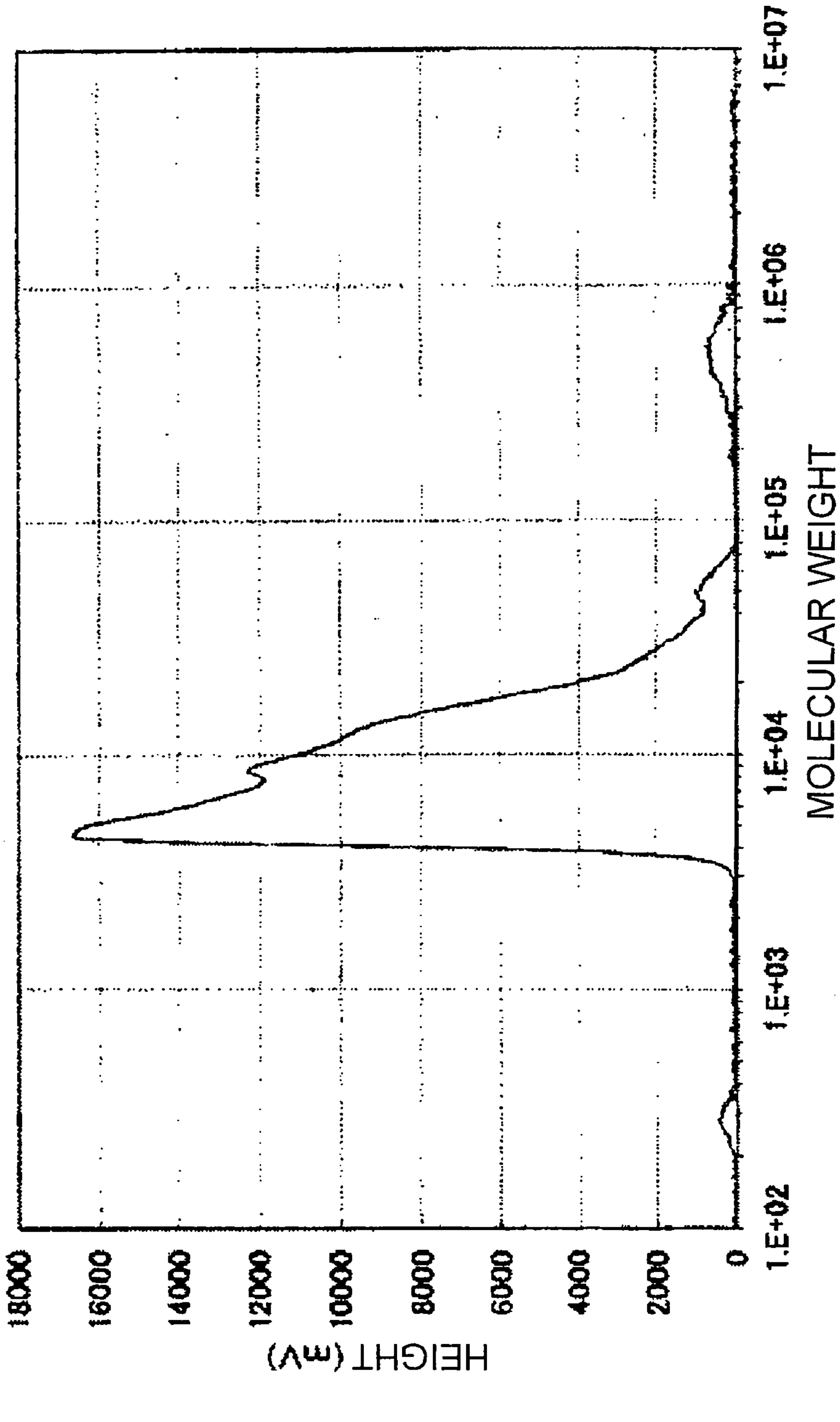
HEIGHT (mV)
18000
16000
14000
12000
10000
8000
6000
4000
2000
0
1.E+02
1.E+03
1.E+04
1.E+05
1.E+06
1.E+07
MOLECULAR WEIGHT

*Fig.7*

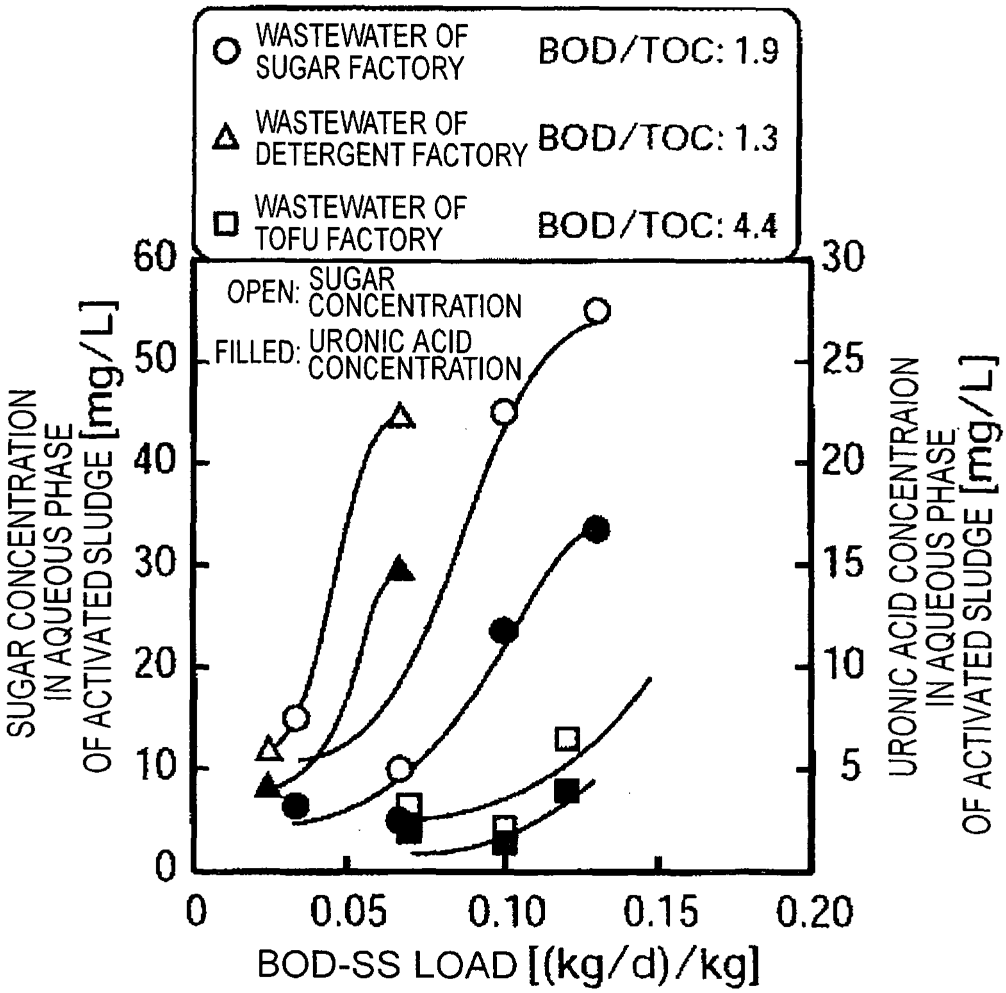
WASTEWATER OF SUGAR FACTORY BOD/TOC: 1.9
WASTEWATER OF DETERGENT FACTORY BOD/TOC: 1.3
WASTEWATER OF TOFU FACTORY BOD/TOC: 4.4
OPEN: SUGAR CONCENTRATION
FILLED: URONIC ACID CONCENTRATION
SUGAR CONCENTRATION IN AQUEOUS PHASE OF ACTIVATED SLUDGE [mg/L]
URONIC ACID CONCENTRAION IN AQUEOUS PHASE OF ACTIVATED SLUDGE [mg/L]
BOD-SS LOAD [(kg/d)/kg]
0
10
20
30
40
50
60
5
15
25
0.05
0.10
0.15
0.20

Fig.8

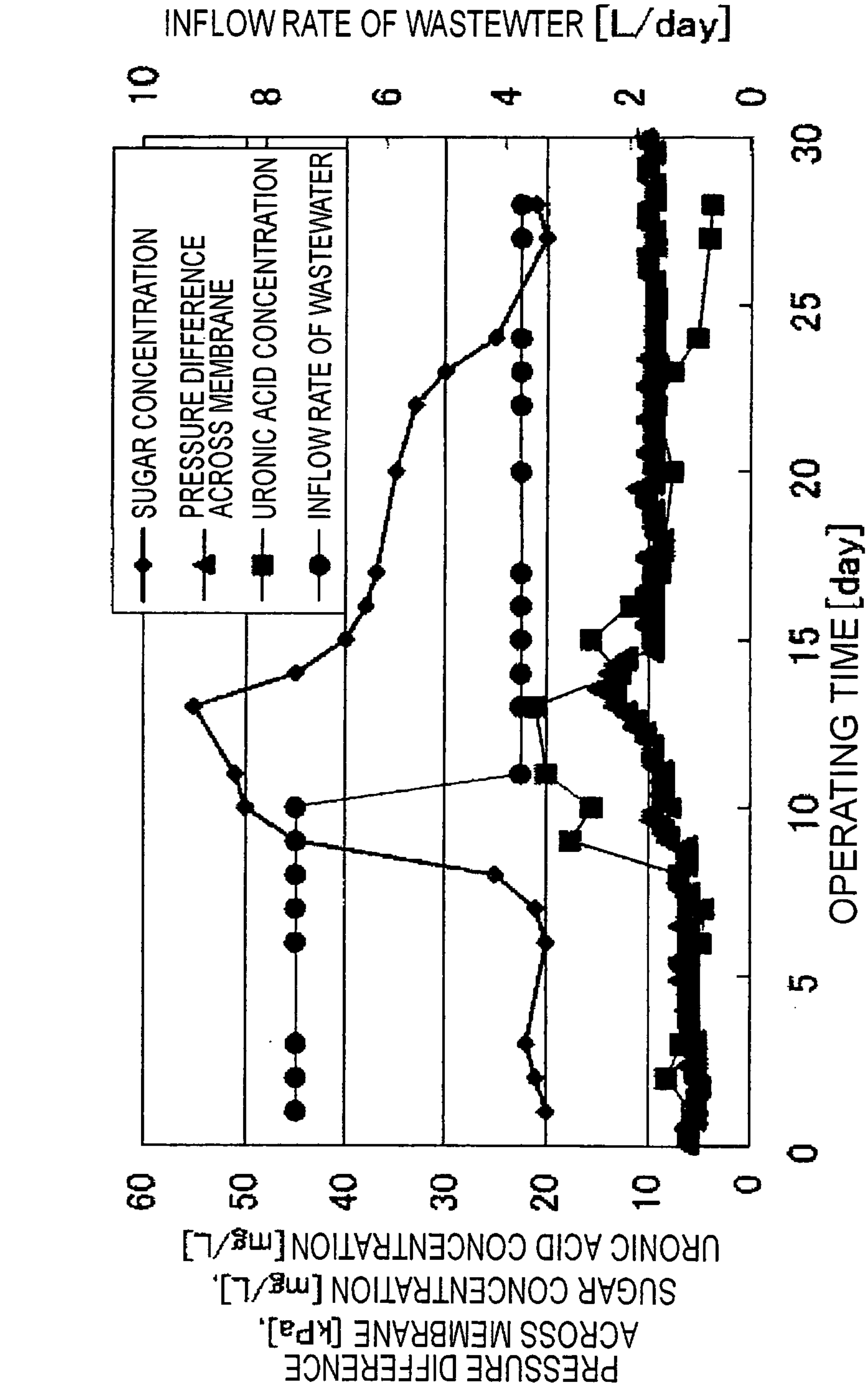
INFLOW RATE OF WASTEWTER [L/day]
SUGAR CONCENTRATION
PRESSURE DIFFERENCE ACROSS MEMBRANE
URONIC ACID CONCENTRATION
INFLOW RATE OF WASTEWATER
OPERATING TIME [day]
PRESSURE DIFFERENCE ACROSS MEMBRANE [kPa], SUGAR CONCENTRATION [mg/L], URONIC ACID CONCENTRATION [mg/L]
0
5
10
15
20
25
30
0
10
20
30
40
50
60
0
2
4
6
8
10

Fig.9

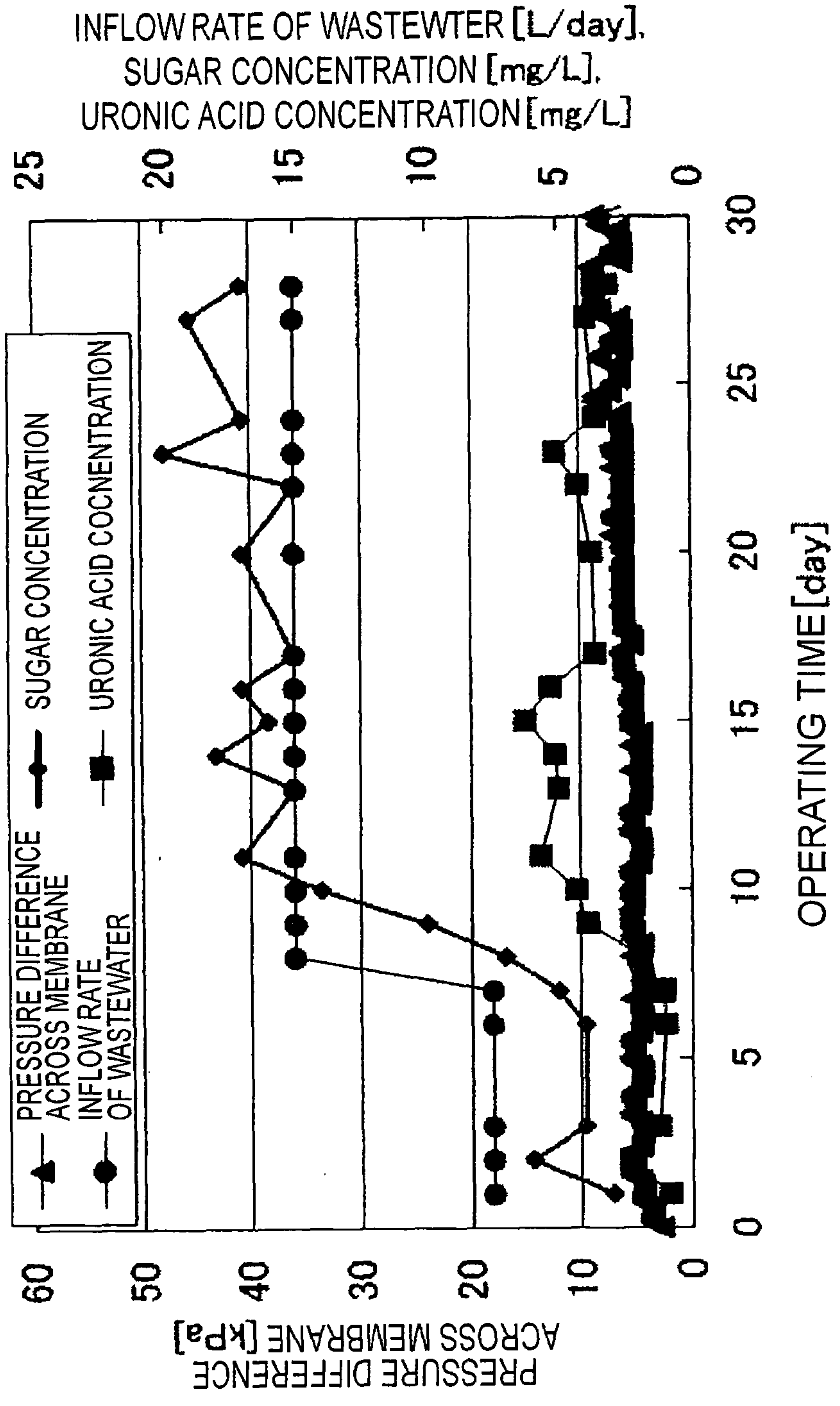
INFLOW RATE OF WASTEWTER [L/day], SUGAR CONCENTRATION [mg/L], URONIC ACID CONCENTRATION [mg/L]
PRESSURE DIFFERENCE ACROSS MEMBRANE [kPa]
OPERATING TIME [day]
PRESSURE DIFFERENCE ACROSS MEMBRANE
INFLOW RATE OF WASTEWATER
SUGAR CONCENTRATION
URONIC ACID COCNENTRATION
0
5
10
15
20
25
30
10
20
30
40
50
60

**INTERNATIONAL SEARCH REPORT**

International application No.
PCT/JP2007/052924

A. CLASSIFICATION OF SUBJECT MATTER
*C02F3/12*(2006.01)i, *C02F1/44*(2006.01)i

According to International Patent Classification (IPC) or to both national classification and IPC

B. FIELDS SEARCHED

Minimum documentation searched (classification system followed by classification symbols)
C02F3/12, C02F1/44

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 10-286567 A (NKK Corp.), 27 October, 1998 (27.10.98), Claim 1; Par. Nos. [0015], [0020] (Family: none) | 1-7 |
| A | JP 2001-276823 A (Sumitomo Heavy Industries, Ltd.), 09 October, 2001 (09.10.01), Claim 1; Par. Nos. [0011], [0013] (Family: none) | 1-7 |
| A | JP 2006-212470 A (Toray Industries, Inc.), 17 August, 2006 (17.08.06), Claim 1; Par. No. [0020] (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 February, 2007 (28.02.07) | 13 March, 2007 (13.03.07) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2007/052924

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2006-55766 A (Mitsubishi Rayon Co., Ltd.), 02 March, 2006 (02.03.06), Claim 2; Par. No. [0027] (Family: none) | 1,5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000157846 A
- JP 2005040747 A
- JP 2002001333 A


### Non-patent literature cited in the description


- **NELLY BLUMENKRANTZ ; GUSTAV ASBOE-HANSEN.** New Method for Quantitative Determination of Uronic Acid. *ANALYTICAL BIOCHEMISTRY,* 1973, vol. 54, 484-489
- New Method for Quantitative Determination of Uronic Acid. *ANALYTICAL BIOCHEMISTRY,* 1973, vol. 54, 484-489